(19) Europäisches Patentamt
European Patent Office
Office européen des brevets

(11) EP 0 585 967 B1

(12) **EUROPEAN PATENT SPECIFICATION**

(45) Date of publication and mention of the grant of the patent:
**01.05.1996 Bulletin 1996/18**

(51) Int Cl.6: **C08F 30/08**, C08F 4/64, C08F 230/08, C08F 210/00

(21) Application number: **93117122.7**

(22) Date of filing: **16.12.1988**

(54) **A process for preparing a silicon containing polymer**

Verfahren zur Herstellung von Silizium enthaltenden Polymeren

Procédé de préparation d'un polymère contenant du silicium

(84) Designated Contracting States:
**DE FR GB IT NL**

(30) Priority: **16.12.1987 JP 316023/87**
**03.02.1988 JP 22063/88**
**26.02.1988 JP 42361/88**
**01.03.1988 JP 45783/88**

(43) Date of publication of application:
**09.03.1994 Bulletin 1994/10**

(62) Application number of earlier application in accordance with Art. 76 EPC: **88311902.6**

(73) Proprietor: **MITSUI TOATSU CHEMICALS, Inc.**
**Chiyoda-Ku Tokyo 100 (JP)**

(72) Inventors:
- **Itoh, Masayoshi**
  **Sakae-ku, Yokohama-shi, Kanagawa-ken (JP)**
- **Wakimura, Kazuo**
  **Sennan-shi, Osaka-fu (JP)**
- **Takeuchi, Ryo**
  **Sakae-ku, Yokohama-shi, Kanagawa-ken (JP)**
- **Iwata, Kenji**
  **Yokohama-shi, Kanagawa-ken (JP)**
- **Kobayashi, Mineo**
  **Yokohama-shi, Kanagawa-ken (JP)**
- **Asanuma, Tadashi**
  **Yokohama-shi, Kanagawa-ken (JP)**
- **Ohnaka, Junko**
  **Osaka-fu (JP)**
- **Tokura, Yoshiko**
  **Wakayama-ken (JP)**
- **Yamamoto, Kazuhiko**
  **Takaishi-shi, Osaka-fu (JP)**

(74) Representative: **Harvey, David Gareth et al**
**Graham Watt & Co.**
**Riverhead**
**Sevenoaks Kent TN13 2BN (GB)**

(56) References cited:
**EP-A- 0 193 317**
**EP-A- 0 240 638**
**GB-A- 1 415 194**
**US-A- 3 223 686**
**US-A- 3 953 414**

- **PATENT ABSTRACTS OF JAPAN vol. 12, no. 299 (C-520)(3146) 15 August 1988 & JP-A-63 068 622 (MITSUI TOATSU) 28 March 1988**
- **PATENT ABSTRACTS OF JAPAN vol. 12, no. 299 (C-520)(3146) 15 August 1988 & JP-A-63 068 622**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 585 967 B1

**Description**

<u>Background of the Invention</u>

a) Field of the Invention

The present invention relates to a process for preparing a silicon containing polymer. More specifically, the present invention relates to a process for preparing a silicon containing polymer by polymerizing a silicon containing compound or copolymerizing a silicon containing compound and an α-olefin in the presence of a catalyst containing a transition metal compound supported on a carrier containing a magnesium halide and an organic aluminum compound.

b) Description of the Prior Art

Almost all commercial uses of silicon containing polymers are limited to organosiloxane.

The raw materials used to prepare organosiloxanes include alkylchlorosilanes, particularly dimethyldichlorosilane, prepared by a "direct reaction" between a silicon metal and a halogenated hydrocarbon. Other commercial uses of silicon containing polymers are limited.

Silicon containing polymers having the formulas (i) through (iv) are known:

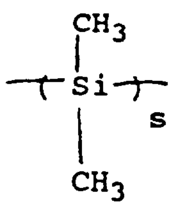 (i) 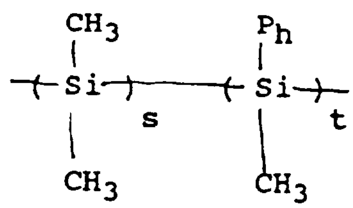 (ii)

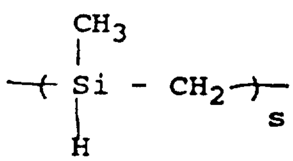 (iii) 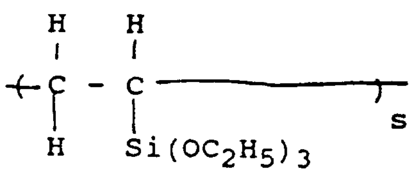 (iv)

The polymer having the formula (i) is prepared by the following reaction in a solvent such as xylene

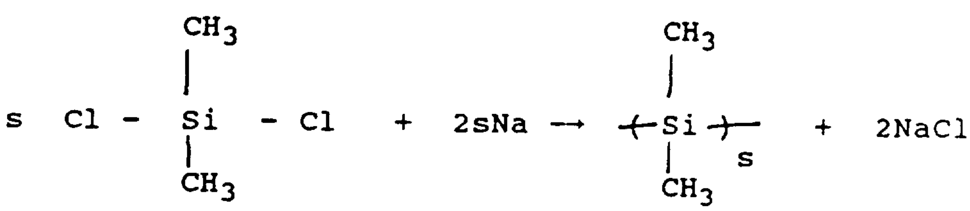

The polymer of the formula (ii) is prepared in the same manner. However, the polymer of the formula

(i) is insoluble in solvents and is not thermoplasticable, whereas the polymer of the formula
(ii) is soluble in solvents and is thermplasticable.

The polymer of the formula (iii) is obtained by pyrolysis of the polymer of the formula (i) under high temperature and high pressure. The polymer of the formula (iii) is soluble in solvents and is thermoplasticable. Polymers of the formulas (i), (ii) and (iii) are used in ceramic binders. Polymers of the formulas (ii) and (iii) are also used as precursors for SiC ceramics, particularly for SiC fiber (for example, Nicalon, Registered trademark of Nippon Carbon Inc.). The polymer of the formula (iv) is a vinylsilane derivative. A copolymer of the polymer of the formula (iv) and ethylene is used widely in wire insulation applications as a water cross-linkable polyethylene.

It is known to polymerize allylsilane or copolymerize allylsilane ($CH_2$=CH-$CH_2$-$SiH_3$) and ethylene or propylene in the presence of a catalyst comprising $TiCl_4$ or $TiCl_3$ and an alkylaluminum compound. (Journal of Polymer Science, Vol. 31, <u>122</u> 181 (1958), Italy Patent No. 606,018, U.S. Patent No. 3,223,686). However, due to the presence of a silyl group (i.e., a $SiH_3$ group), the polymerizibility of a silicon containing monomer is poor and results in low yield. Further, catalyst residues remain in the polymer. Thus, by using a $TiCl_4$ catalyst, a silicon containing polymer of high purity cannot be obtained. Further, it is also difficult economically to promote copolymerization between a silicon compound and an α-olefin because the reactivities of the silicon compound and an α-olefin such as ethylene or propylene are

very different when a $TiCl_4$ or $TiCl_3$ catalyst is employed. Further, due to interactions between the catalyst and the silyl group, crosslinking between intermolecular chains during polymerization or after treatment processes occur.

The present inventors have proposed that when the polymers obtained by polymerization of the silicon compounds represented by either of the following formulas

$$CH_2 = CH - (R^2)_n\text{-}SiH_m(R^3{}_{3\text{-}m})$$

$$CH_2 = CH - (R^2)_n\text{-}Si_pH_{2p+1}$$

in the presence of the above mentioned catalyst are baked at a high temperature, high yield polymers are obtained that are useful as prepolymers in the preparation of ceramics (PCT application International Publication Number is WO 88/05779).

The silyl groups in the polymers are reactive and can be reacted with groups such as C = C, C = O, NH, OH,

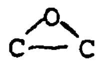

and O-O. Thus, the polymer has multifunctional applications.

## SUMMARY OF THE INVENTION

The present invention advances the state of the art by providing a process for preparing silicon containing polymers of high purity and high yield.

Another feature of the invention is to provide a process for preparing silicon containing polymers economically.

Additional features and advantages of the invention will be set forth in the description that follows and in part will be apparent from the description or may be learned by practicing the invention. The features and advantages of the invention may be realized and obtained by means of the combinations particularly pointed out in the appended claims.

To achieve these features, and in accordance with the invention, there is provided a process for preparing silicon containing polymers comprising polymerizing a silicon containing compound or copolymerizing a silicon containing compound and an $\alpha$-olefin in the presence of a catalyst containing a transition metal compound supported on a magnesium halide containing carrier and an organic aluminum compound.

Specifically, the present invention provides a process for preparing a silicon containing polymer comprising polymerizing a silicon containing compound or copolymerizing a silicon containing compound and an $\alpha$-olefin, wherein the silicon containing compound is of the formula (I) or (II):

$$CH_2 = CH - (R^2)_n\text{-}SiH_m(R^3_{3\text{-}m}) \qquad (I)$$

$$CH_2 = CH - (R^2)_n\text{-}Si_pH_{2p+1} \qquad (II)$$

wherein n is zero or an integer of from 1 to 12, m is an integer of from 1 to 3, p is an integer of from 1 to 3, $R^2$ is an alkylene or a phenylene group, and $R^3$ is a methyl, a phenyl or halogen group,
in the presence of a catalyst comprising

(a) a titanium compound supported on a magnesium halide carrier, and
(b) an organic aluminum compound of the formula

$$AlR'_nX_{3\text{-}n} \qquad (III)$$

wherein R' is a $C_1$-$C_{12}$ alkyl group, X is a halogen and $1 \leq n \leq 3$.

The present invention also provides a process for preparing silicon containing polymers by polymerizing the above identified silicon compound or colpolymerizing the silicon containing compound and an $\alpha$-olefin in the presence of an electron donor and a catalyst comprising a titanium compound supported on a magnesium halide carrier and an organic aluminum compound of the formula (III).

The foregoing and other features and advantages of the present invention will be made more apparent from the following description of the preferred embodiments of the invention.

## BRIEF DESCRIPTION OF THE DRAWINGS

Figure 1 is an IR spectrum of polyvinylsilane.
Figure 2 sets forth XRD measurements of polyvinylsilane.
Figure 3 is an IR spectrum of polyallylsilane.

DETAILED DESCRIPTION OF THE INVENTION

Reference will now be made to the preferred embodiments of the present invention. Exemplary suitable silicon containing compounds useful in the process of the invention include alkenylsilanes, for example, vinylsilane, allylsilane, butenylsilane and pentenylsilane.

Silicon containing compounds containing a silyl group can be prepared by several methods. For example, the following reaction may be employed:

$$SiH_4 + CH_2{=}CH\text{-}R^2\text{-}CH{=}CH_2 \rightarrow CH_2{=}CH\text{-}R^2\text{-}CH_2\text{-}CH_2SiH_3$$

(See PCT application, International Publication Number WO 88/05779).

The demand for $SiH_4$ (monosilane) compounds has recently increased, particularly for use as polysilicon or an amorphous silicon. $SiH_4$ compounds may be prepared at low cost and in large quantities. It is expected that the number of applications for $SiH_4$ compounds will continue to increase in the future, as will application of $Si_2H_6$ and $Si_3H_8$ compounds.

Preferably, the $\alpha$-olefin used in the copolymerization of the silicon containing compound is a $C_2$-$C_{12}$ $\alpha$-olefin, more preferably a $C_2$-$C_6$ olefin selected from the group consisting of ethylene, propylene, butene-1, pentene-1, hexene-1 and 4-methylpentene-1 and a mixture of two or more of these compounds.

Polymerization Process

Catalyst

The catalyst used in the process of the invention comprises a titanium compound supported on a carrier which contains both a magnesium and a halide compound.

Preferably, the compound contained in the carrier is selected from the group consisting of magnesium chloride, magnesium bromide, magnesium iodide, magnesium fluoride, and oxyhalogenated magnesium. More preferably, magnesium chloride is employed. Further, commercially available magnesium halide compounds can be employed.

The titanium compound used in the process of the invention is preferably a trivalent or tetravalent titanium compound, for example, titanium trichloride, titanium tetrachloride, titanium tetrabromide, titanium tetraiodide, methoxytitanium trichloride, dimethoxytitaniumdichloride and triethoxytitaniumchloride. More preferably, a chlorine containing titanium compound such as tetravalent titanium tetrachloride can be employed.

Preferably, one of the following methods is employed to support a titanium compound on a magnesium chloride carrier. A magnesium halide and a titanium compound are co-pulverized in a ball mill. A powder of magnesium halide is charged into a solution of benzene, toluene, heptane or hexane containing a liquid titanium compound. A liquid titanium compound is charged into the solution and thereafter, magnesium halide is precipitated. The titanium compound is simultaneously supported on the magnesium halide.

Other known methods can also be used. A catalyst suitable for use in the invention may also be prepared by reacting (1) a magnesium compound such as $Mg(OR^4)(OR^5)$ or $Mg(OR^4)X$, wherein $R^4$ and $R^5$ represent an alkyl group, an aryl group or derivatives thereof and X is a halogen, with (2) a titanium compound, to support the titanium compound on the agnesium compound. The magnesium compound should be partially chlorinated to form a magnesium halide.

Preferably, additives (so-called "third components") such as an electron donor, a halogenated hydrocarbon, for example, carbon tetrachloride or chloroform, are preferably present in the catalyst component. The inventors have discovered that such additives improve polymer yield and properties. The additive compounds may be added in the reaction zone during preparation of the catalyst.

The electron donors may be from compounds containing O, N, P, S or Si. For example, an ester, an ether, a ketone, an aldehyde, an amine, an amide, a nitrile, a thioester, a thioether or an alkoxysilane compound may be employed.

Preferably, an organic acid ester or an inorganic ester such as an ester of carbonic acid, sulfuric acid, phosphoric acid, phosphorous acid and silicic acid is employed.

Exemplary suitable organic acid esters for use in the catalyst include saturated or unsaturated aliphatic acid esters such as methylformate, n-butyl formate, allylbutylate, methyl acrylate and methyl chloroacetate; aromatic carboxylic acid esters such as methyl benzoate, n-propyl benzoate, iso-propyl benzoate, cyclohexyl benzoate, methyl p-hydroxy benzoate, cyclohexyl p-hydroxy benzoate, methyl anisiate, methyl p-ethoxy benzoate, methyl p-toluate, ethyl p-toluate, phenyl p-toluate, ethyl p-amino benzoate, dimethyl terephthalate and dimethyl phthalate; and acyclic organic acid esters such as methyl cyclohexanoate.

Exemplary suitable inorganic acid esters for use in the catalyst include trimethylphosphite, triphenyl phosphite, diethyl dibenzyl phosphonate, dipropyl sulfate, iso-amyl sulfite; alkoxy silane or alkylalkoxy silane such as tetraethoxysilane and tetramethoxy silane.

Exemplary suitable ethers for use in the catalyst include diethylether, dibutylether and diphenylether. Ketones such as methylethylketone; aldehydes such as acetoaldehyde and benzaldehyde; amines such as n-propylamine and aniline; nitriles such as pentane dinitrile; amides such as propane amide; and thioethers such as allylbenzylsulfite.

Preferably, alkoxysilane compounds are selected from the group consisting of phenyltriethoxysilane, diphenyldiethoxysilane and methyltriethoxysilane.

Electron donor compounds can be used solely or in a mixture of two or more such compounds. Preferably, an electron donor compound is selected from the group consisting of organic acid esters, ethers and alkoxysilane compounds having an aromatic group or a derivative thereof.

The magnesium halide content in the catalyst is preferably not less than 50 weight percent, more preferably not less than 70 weight percent. The amount of titanium supported on a magnesium halide is preferably not greater than 10 weight percent, more preferably not greater than 5 weight percent, most preferably from about 0.5 to about 2 weight percent.

Exemplary suitable organic aluminum compounds for use in the invention include trimethyl aluminium, triethyl aluminum, tri-n-propyl aluminum, tri-iso-butyl aluminum, tri-n-hexyl aluminum, diethyl almuminum monochloride, di-iso-butyl aluminum monochloride, ethylaluminumsesquichloride, ethylaluminumdichloride, diethylaluminum monobromide, diethyl aluminum monoiodide and diethylaluminium monofluoride and a mixture of two or more of these organic aluminum compounds.

The electron donor compounds can be used as a component of the catalyst. The electron donor compound can be selected from the above mentioned donor compounds. Preferably, organic acid esters such as methyl benzoate, ethyl benzoate, p-toluic acid methylester, p-toluic acid ethylester, methyl anisiate and ethyl anisiate; alkoxy silane compounds such as phenyltriethoxysilane, diphenyldiethoxysilane and methyltriethoxysilane can be employed.

The mole ratio of the organic aluminum compound to the titanium compound is preferably from about 1 mole to about 500 of organic aluminum compound to 1 mole of titanium compound. The mole ratio of the electron donor compound to the organic aluminum compound is less than about 5 moles of electron donor compound per mole of organic aluminum compound, preferably from about 0.01 to about 1.5 moles of electron donor compound per mole of organic aluminum compound.

Polymerization Process

The polymerization may be carried out by any conventional process for polymerizing $\alpha$-olefins.

The polymerization process is preferably carried out at a temperature of from about 20°C to about 100°C, more preferably from about 40°C to about 90°C and a pressure of from about 1 to about 100 kg/cm$^2$ absolute, more preferably from about 1 to about 50 kg/cm$^2$ absolute.

Generally, the polymerization is carried out by a solvent polymerization process in which a solvent such as an aliphatic hydrocarbon, an acyclic hydrocarbon and an aromatic hydrocarbon or a mixture thereof is used. For example, propane, butane, pentane, hexane, heptane, cyclohexane and benzene and a mixture thereof can be used.

A bulk polymerization process may be used in which a reaction monomer is used as a solvent. A vapor-phase polymerization process may also be employed in which polymerization is carried without any substantial solvent and a gas phase monomer is contacted with a catalyst.

The molecular weight of the polymer prepared by the present invention varies according to the reaction methods, the catalyst systems and the polymerization conditions. However, the molecular weight of the polymer can be controlled by adding hydrogen, an alkylhalide or a dialkyl zinc if necessary.

No limitation is placed on the stereoregurality and molecular weight, however, it is preferable with respect to polymer processability and solubility to obtain a polymer weight having a molecular weight of from about 100 to about 10,000,000, more preferably from about 200 to about 1,000,000.

In the case of copolymerization, the weight ratio of the $\alpha$-olefin to the silicon containing compound is from about 0.00001 to about 100,000, more preferably from about 0.001 to about 1,000 parts $\alpha$-olefin to 1 part silicon containing compound. However, the appropriate weight ratio may be determined according to the desired use of the copolymer.

By use of the catalyst of the present invention, higher polymerizability of the silicon containing compound is achieved and thus polymers are easily obtained and the rate of formation of oligomers soluble in a solvent is low. It is also convenient to carry out copolymerization of a silicon containing compound and an $\alpha$-olefin.

The silicon containing polymers of the invention can be prepared from monomers which are low in cost.

The preparation of the present polymers can be carried out in a chlorine free system whereas prior art processes use an alkylchlorosilane for a monomer. Thus in the present invention there is no corrosion of reaction equipment. Further the process of the present invention can be carried out at a lower cost.

The processability of the polymer, i.e., flowability of melted polymer and solubility to a solvent, can be easily varied by controlling the monomer composition of the copolymer, the molecular weight and the stereoregularity of the polymer. The silyl groups ($SiH_3$) in the polymer are relatively stable and do not oxidize in air at room temperature. Rather, the

silyl groups are oxidized at a temperature of about from 100 to about 200°C. Accordingly, this polymer is not difficult to handle. Since the silicon containing polymers of the present invention are soluble in a solvent and are thermoplastic, the polymer is useful in numerous applications. The polymer can be utilized as a prepolymer for ceramics (SIC), as a binder for ceramics, as a material for a semiconductor and as a photoresist. These utilization are based on the high reactivity of the Si-H bond, and the electrical/conductivity or photo-degradative tendency of Si-Si bond.

Preferably, the utilized property of this polymer is the reactivity of silyl groups. It is possible to add beneficial properties to known polymers by introducing the silicon containing compound of the invention into a polymer, such as polystyrene in the form of a copolymer.

Thus, the present invention provides multi-functional materials which have previously existed.

The invention will be further clarified by the following examples, which are intended to be purely exemplary of the invention.

Example 1:

Preparation of the Solid Catalyst Component

An oscillating mill equipped with a grinding pot containing 80 steel balls having a diameter of 12 mm and an inner volume of 600 ml was used. 20 g of magnesium chloride, 2 ml of p-toluic acid methyl ester, 2 ml of carbon tetrachloride and 2 ml of ethyl silicate were placed in the grinding pot and ground for 20 hours at room temperature. Into a 200 ml-flask, 10 g of the ground mixture, 50 ml of titanium tetrachloride and 100 ml of heptane were added and reacted at 80°C for 2 hours in a nitrogen atmosphere. The resultant supernatant was removed by decantation and the solid portion was washed repeatedly eight times with 100 ml of n-heptane at room temperature. A solid catalyst component slurry (the component (A) of this invention) was obtained. A sample portion of the slurry was removed and then vaporization of n-heptane was carried out. The titanium and magnesium content of the catalyst were analyzed and determined to be 1.5 weight percent titanium and 20 weight percent magnesium.

Polymerization

To a 500 ml autoclave, 102 g of vinylsilane, 240 ml of n-heptane, and a solid catalyst component slurry containing 2 g of solid component and 8 ml of triisobutylaluminum were added. Polymerization was carried out at 70°C for 3 hours and then unreacted vinylsilane was purged to obtain a polymer. The polymer was added to a 1 liter methanol solution by stirring, followed by filtration. 60 g of white polyvinylsilane powder were obtained. About 20 g of liquid oligomers were recovered from the filtrate.

The yield of polymer powder was 59% and the selectivity of the polymer powder (e.g. the rate of the polymer powder to the amount of the polymer powder and the liquid oligomer recovered) was 75%. The amount of polymerized polymer was calculated by analyzing titanium and was found to be 200 g/g-Ti.

The IR spectrum and XRD measurements of the polymer are shown in Figures 1 and Figure 2 respectively.

Comparative Example 1:

Example 1 was repeated except that 2 g of titanium trichloride catalyst (TOHO TITANIUM INC. Ti content 24 weight percent) and 7 ml of triisobutylaluminum were used. 16 g of polymer powder and about 50 g of liquid oligomer were recovered from the filtrate.

The yield of the polymer powder was 16% and the selectivity of the polymer powder was 24%.

The amount of polymerized polymer was calculated by analyzing titanium and was found to be 33 g/g-Ti.

Example 2:

Example 1 was repeated except that 109 g of allylsilane, rather than vinylsilane were used. 96 g of polymer powder of allylsilane were obtained and about 10 g of liquid oligomer were recovered from the filtrate.

The yield of the polymer powder was 88% and the selectivity of the polymer powder was 91%.

The amount of the polymerized polymer was calculated by analyzing titanium and was found to be 3200 g/g-Ti.

The IR spectrum of the polyallylsilane obtained is shown in Figure 3.

Comparative Example 2:

Example 2 was repeated except that the catalyst used in Comparative Example 1 was employed rather than the catalyst of Example 2. 45 g of polymer powder were obtained and about 50 g of liquid oligomer were recovered from

the filtrate.

The yield of the polymer powder was 41% and the selectivity of the powder polymer was 47%.

The amount of the polymerized polymer was calculated by analyzing titanium and was found to be 94 g/g-Ti.

Example 3:

Example 1 was repeated except that 2 ml of ethyl benzoate were added to the polymerization autoclave together with the solid catalyst component slurry and triisobutylaluminum. 44 g of the polymer powder and about 5 g of liquid oligomer were recovered from the filtrate.

The yield of the polymer powder was 43% and the selectivity of the polymer powder was 90%.

The amount of the polymerized polymer was calculated by analyzing titanium and was found to be 1467 g/g-Ti.

Example 4:

Copolymerization of propylene and vinylsilane was carried out using the catalyst prepared in Example 1.

To a 500 ml autoclave, 74 g of vinylsilane, 14 g of propylene, 214 ml of n-heptane, and a solid catalyst component slurry containing 2 g of solid component, 7 ml of triisobutylaluminum and 0.7 ml of p-toluic acid methyl ester were added. Copolymerization was carried out at 70°C for 3 hours at a pressure of 3 $kg/cm^2G$. Unreacted vinylsilane and propylene were then purged to obtain a polymer. Unreacted vinylsilane and propylene were then purged to obtain a polymer. The polymer was added to 1 liter of methanol by stirring, followed by filtration. 38 g of a white polyvinylsilane powder were obtained.

The percent of vinylsilane in the copolymer was determined to be 78 weight percent.

Comparative Example 3:

Example 1 was repeated except that 2 g of titanium trichloride type catalyst (TOHO TITANIUM INC.) and 7 ml of triisobutylaluminum were employed. 11 g of polymer were obtained.

The percent of vinylsilane in the copolymer was determined to be 37 weight percent.

Example 5:

Example 4 was repeated except that 10 g of vinylsilane and 102 g of propylene were used as monomers. 85 g of copolymer were obtained. The percent of vinylsilane in the copolymer was determined to be 1.2 weight percent.

Example 6:

Example 4 was repeated except that 7 g of allylsilane and 97 g of propylene were used.

69 g of copolymer were obtained. The percent of allylsilane was 3.1 weight percent measured by elemental analysis.

Example 7:

Example 4 was repeated except that 13 g of vinylsilane and 109 g of ethylene were used as monomers and p-toluic acid methylester was not employed. 88 g of copolymer were obtained. The percent of vinylsilane was determined to be 1.9 weight percent.

Example 8:

(a) Preparation of the polymerization catalyst

An oscillating mill equipped with four grinding pots which contained 9 kg of steel balls having a diameter of 12 mm and an inner volume of 4 liters were employed. In each pot,
300 g of magnesium chloride, 60 ml of tetraethoxysilane and 45 ml of α,α,α-trichlorotoluene were added and ground for 40 hours in an atmosphere of nitrogen. The ground mixture thus obtained (300 g) was charged in a 5 liter flask. 1.5 liters of titanium tetrachloride and 1.5 liters of toluene were added to the ground mixture, followed by stirring at 100°C for 30 minutes. The supernatant was removed. An additional 1.5 liters of titanium tetrachloride and 1.5 liters of toluene were added to the solid portion obtained, followed by stirring at 100°C for 30 minutes. The resultant supernatant was removed and the solid portion was washed repeatedly with n-hexane, thereby obtaining a transition metal catalyst

slurry. A part of the slurry was taken out as a sample and its titanium content was analyzed. It was found to be 1.9 weight percent. By vaporizing toluene in the filtrate, 1.7 g of toluene soluble polymer were recovered.

(b) Random Copolymerization of Vinylsilane and Propylene

To a pressure-tight glass autoclave having an inner volume of 200 ml the following were added: 40 ml of toluene, 20 mg of the above-described transition metal catalyst, 0.128 ml of diethylaluminum chloride, 0.06 ml of p-toluic acid methyl ester and 0.20 ml of triethylaluminum in an atmosphere of nitrogen. To the resultant mixture 2.0 g of vinylsilane were charged, then propylene was charged up to a pressure of 5 $kg/cm^2$, followed by polymerization at 70°C for 2 hours. After the polymerization reaction, the polymer containing slurry was filtrated and then dried. 43 g of random copolymer powder were obtained. The intrinsic viscosity of the powder was 1.45 dl/g measured at 135°C in a tetralin solution. The melting point and crystallizing temperatures were measured at maximum peak temperatures by raising or decreasing the temperature at a rate of 10°C/min. by means of a differential-thermal analysis instrument. The melting point was 156°C and the crystallizing temperature was 118°C. The amount of polymerized vinylsilane in the random copolymer was calculated by analyzing silicon and was found to be 1.6 weight percent.

Comparative Example 4:

Example 8 was repeated except that 200 mg of high activity titanium trichloride (MARUBENI SOLUEY INC. TGY-24) and 1 ml of diethylaluminium monochloride were used as polymerization catalysts.

23 g of a toluene insoluble polymer and 1.3 g of a toluene soluble polymer were obtained.

The intrinsic viscosity of the toluene insoluble polymer was 1.85, the melting point was 148°C and the crystallizing temperature was 115°C. The percent of vinylsilane in the polymer was determined to be 0.8 weight percent.

Example 9:

Example 8 was repeated except that 2.0 g of vinylsilane, 20 g of ethylene and 40 g of propylene were employed. The resultant polymer was charged into a methanol solution to precipitate the polymer, followed by separation and drying.

58 g of polymer were obtained. The ethylene content of the polymer was determined to be 38 weight percent and the vinylsilane content was 1.6 weight percent. The intrinsic viscosity was 1.78 dl/g.

**Claims**

1. A one-stage process of preparing a silicon containing random copolymer comprising copolymerizing a silicon containing compound of the formula (I) or (II):

$$CH_2 = CH\text{-}(R^2)_n\text{-}SiH_m(R^3{}_{3\text{-}m}) \quad (I)$$

$$CH_2 = CH\text{-}(R^2)_n\text{-}Si_pH_{2p+1} \quad (II)$$

wherein n is zero or an integer of from 1 to 12, m is an integer of from 1 to 3, p is an integer of from 1 to 3, $R^2$ is an alkylene or a phenylene group and $R^3$ is a methyl, phenyl or halogen group together with an α-olefin compound in the presence of a catalyst comprising

(a) a titanium compound supported on a magnesium halide carrier, and
(b) an organic aluminum compound of the formula

$$A\ell R'_rX_{3\text{-}r}$$

wherein R' is a $C_1$-$C_{12}$ alkyl group, X is a halogen and $1 \leq r \leq 3$.

2. The process of claim 1 wherein said silicon containing compound is selected from the group consisting of vinylsilane, allylsilane, butenylsilane and pentenylsilane.

3. The process of claim 1 wherein said titanium compound is selected from the group consisting of a trivalent and a tetravalent titanium compound.

4. The process of claim 3 wherein said titanium compound is selected from the group consisting of titanium trichloride,

titanium tetrachloride, titanium tetrabromide, titanium tetraiodide, methoxy titanium trichloride, dimethoxy titanium dichloride and triethoxy titanium chloride.

5. The process of claim 1 wherein the catalyst component (a) contains a halogenated hydrocarbon.

6. The process of claim 5 wherein said halogenated hydrocarbon compound is selected from the group consisting of carbon tetrachloride or chloroform.

7. The process of claim 1 wherein the catalyst component (a) contains at least one electron donor compound.

8. The process of claim 7 wherein said electron donor compound is selected from the group consisting of ester, ether, ketone, aldehyde, amine, amide, nitrile, thioester, thioether and alkoxysilane compounds.

9. The process of claim 8 wherein said ester is an organic acid ester.

10. The process of claim 8 wherein said alkoxysilane compound is selected from the group consisting of alkoxysilane compounds having an aromatic group and derivatives of such alkoxysilane compounds.

11. The process of claim 1 wherein the catalyst comprises not greater than 10 weight percent titanium and not less that 70 weight percent of a magnesium halide compound.

12. The process of claim 1 wherein the catalyst comprises not greater than 5 weight percent titanium and not less than 50 weight percent of a magnesium halide compound.

13. The process of claim 1 wherein the catalyst comprises from 0.5 to 2 weight percent titanium and not less than 70 weight percent of a magnesium halide compound.

14. The process of claim 1 wherein said organic aluminum compound is selected from the group consisting of trimethyl aluminum, triethyl aluminum, tri-n-propyl aluminum, tri-iso-butyl aluminum, tri-n-hexyl aluminum, diethyl aluminum monochloride, di-iso-butyl aluminum monochloride, ethyl aluminum sesquichloride, ethyl aluminum dichloride, diethyl aluminum monobromide, diethyl aluminum monoiodide, diethylaluminum monofluoride and a mixture of at least two of these compounds.

15. The process of claim 1 wherein the molar ratio of the organic aluminum compound to the titanium compound is from 1 to 500 moles of organic aluminum compound per mole of titanium compound.

16. The process of claim 7 wherein the molar ratio of the electron donor compound to the organic aluminum compound (b) of the catalyst is not less than 5 moles of electron donor compound per mole of organic aluminum compound.

17. The process of claim 1 wherein polymerization is carried out at a temperature of from 20°C to 100°C.

18. The process of claim 1 wherein polymerization is carried out at a pressure of from 1 $kg/cm^2$abs to 100 $kg/cm^2$abs.

19. the process of claim 1 wherein the $\alpha$-olefin compound is a $C_2$-$C_{12}$ $\alpha$-olefin compound.

20. The process of claim 19 wherein the $\alpha$-olefin compound is selected from the group consisting of ethylene, propylene, butene-1, pentene-1, hexene-1, 4-methyl pentene-1 and a mixture of at least two of these compounds.

21. The process of claim 1 wherein the weight ratio of the $\alpha$-olefin compound to the silicon containing compound is from 0.00001 parts to 100,000 parts by weight $\alpha$-olefin to 1 part by weight silicon containing compound.

**Patentansprüche**

1. Einstufenverfahren zur Herstellung eines silizium-haltigen willkürlichen Copolymeren, umfassend die Copolymerisation einer siliziumhaltigen Verbindung der Formel (I) oder (II):

$$CH_2 = CH- (R^2)_n -SiH_m (R^3{}_{3-m}) \qquad (I)$$

$$CH_2 = CH\text{-} (R^2)_n \text{ - } Si_pH_{2p+1} \qquad (II)$$

worin n 0 oder eine ganze Zahl von 1 - 12 ist, m eine ganze Zahl von 1 - 3 ist, p eine ganze Zahl von 1 - 3 ist, $R^2$ ein Alkylen oder eine Phenylengruppe darstellt, und $R^3$ eine Methyl-, Phenyl- oder Halogengruppe ist, zusammen mit einer alpha-Olefinverbindung in Anwesenheit eines Katalysators, enthaltend

(a) eine Titanverbindung, die auf einem Magnesiumhalogenidträger getragen wird, und
(b) eine organische Aluminiumverbindung der Formel

$$AlR'_rX_{3-r},$$

worin R' eine $C_1$-$C_{12}$ Alkylgruppe, X ein Halogen und $1 \leq r \leq 3$ ist.

**2.** Verfahren nach Anspruch 1, worin die siliziumhaltige Verbindung ausgewählt ist aus der Gruppe bestehend aus Vinylsilan, Allylsilan, Butenylsilan und Pentenylsilan.

**3.** Verfahren nach Anspruch 1, worin die besagte Titanverbindung ausgewählt ist aus der Gruppe bestehend aus einer trivalenten und einer tetravalenten Titanverbindung.

**4.** Verfahren nach Anspruch 3, worin die besagte Titanverbindung ausgewählt ist aus der Gruppe bestehend aus Titantrichlorid, Titantetrachlorid, Titantetrabromid, Titantetrajodid, Methoxytitantrichlorid, Dimethoxytitandichlorid und Triethoxytitanchlorid.

**5.** Verfahren nach Anspruch 1, worin die Katalysatorkomponente (a) einen halogenierten Kohlenwasserstoff enthält.

**6.** Verfahren nach Anspruch 5, worin die besagte halogenierte Kohlenwasserstoff-Verbindung ausgewählt ist aus der Gruppe bestehend aus Kohlenstofftetrachlorid oder Chloroform.

**7.** Verfahren nach Anspruch 1, worin die Katalysatorkomponente (a) wenigstens eine Elektronendonatorverbindung enthält.

**8.** Verfahren nach Anspruch 7, worin die Elektronendonatorverbindung ausgewählt ist aus der Gruppe bestehend aus Ester-, Äther-, Keton-, Aldehyd-, Amin-, Amid-, Nitril-, Thioester-, Thioäther- und Alkoxysilan-Verbindungen.

**9.** Verfahren nach Anspruch 8, worin der besagte Ester ein organischer Säureester ist.

**10.** Verfahren nach Anspruch 8, worin die besagte Alkoxysilanverbindung ausgewählt ist aus der Gruppe bestehend aus Alkoxysilanverbindungen mit einer aromatischen Gruppe und Derivaten solcher Alkoxysilanverbindungen.

**11.** Verfahren nach Anspruch 1, worin der Katalysator nicht mehr als 10 Gewichts-% Titan und nicht weniger als 70 Gew.-% Magnesiumhalogenidverbindung enthält.

**12.** Verfahren nach Anspruch 1, worin der Katalysator nicht mehr als 5 Gewichts-% Titan und nicht weniger als 50 Gew.-% Magnesium-Halogenid-Verbindung enthält.

**13.** Verfahren nach Anspruch 1, worin der Katalysator von 0,5 - 2 Gew.-% Titan und nicht weniger als 70 Gew.-% einer Magnesium-Halogenid-Verbindung enthält.

**14.** Verfahren nach Anspruch 1, worin die besagte organische Aluminiumverbindung ausgewählt ist aus der Gruppe bestehend aus Trimethylaluminium, Triäthylaluminium, Tri-n-propyl-aluminium, Tri-isobutyl-aluminium, Tri-n-hexylaluminium, Diäthylaluminiummonochlorid, Di-iso-butyl-aluminiummonochlorid, Äthylaluminiumsesquichlorid, Äthylaluminiumdichlorid, Diäthylaluminiummonobromid, Diäthylaluminiummonojodid, Diäthylaluminiummonofluorid und einer Mischung aus wenigstens zwei dieser Verbindungen.

**15.** Verfahren nach Anspruch 1, worin das Molverhältnis der organischen Aluminiumverbindung zu der Titanverbindung von 1 - 500 Mol der organischen Aluminiumverbindung pro Mol der Titanverbindung beträgt.

**16.** Verfahren nach Anspruch 7, worin das Molverhältnis der Elektronendonatorverbindung zur organischen Aluminiumverbindung (b) des Katalysators nicht weniger als 5 Mol der Elektronendonatorverbindung pro Mol der organischen Aluminiumverbindung beträgt.

**17.** Verfahren nach Anspruch 1, worin die Polymerisation bei einer Temperatur von 20°C - 100°C durchgeführt wird.

**18.** Verfahren nach Anspruch 1, worin die Polymerisation bei einem Druck von 1 bar abs. (1 kg/cm$^2$ abs.) bis 100 bar abs. (100 kg/cm$^2$ abs.) durchgeführt wird.

**19.** Verfahren nach Anspruch 1, worin die alpha-Olefinverbindung eine $C_2$-$C_{12}$-alpha-Olefinverbindung ist.

**20.** Verfahren nach Anspruch 19, worin die alpha-Olefinverbindung ausgewählt ist aus der Gruppe bestehend aus Äthylen, Propylen, Buten-1, Penten-1, Hexen-1, 4-Methylpenten-1 und einer Mischung aus wenigstens zwei dieser Verbindungen.

**21.** Verfahren nach Anspruch 1, worin das Gewichtsverhältnis der alpha-Olefinverbindung zu der siliziumhaltigen Verbindung von 0,00001 Gewichtsteilen bis 100.000 Gewichtsteilen alpha-Olefin zu 1 Gewichtsteil siliziumhaltiger Verbindung beträgt.

## Revendications

**1.** Procédé en une seule étape pour préparer un copolymère statistique contenant du silicium, comprenant la copolymérisation d'un composé contenant du silicium de formule (I) ou (II)

$$CH_2{=}CH\text{-}(R^2)_n\text{-}SiH_m(R^3{}_{3-m}) \qquad (I)$$

$$CH_2{=}CH\text{-}(R^2)_n\text{-}Si_pH_{2p+1} \qquad (II)$$

où n est zéro ou un entier de 1 à 12, m est un entier de 1 à 3, p est un entier de 1 à 3, $R^2$ est un groupe alkylène ou phénylène et

$R^3$ est un groupe méthyle, phényle ou halogéno,

avec un composé $\alpha$-oléfine, en présence d'un catalyseur comprenant

(a) un composé du titane porté sur un support d'halogénure de magnésium et
(b) un composé organoaluminique de formule

$$AlR'_rX_{3-r}$$

dans laquelle R' est un groupe alkyle en $C_1$-$C_{12}$, X est un halogène et $1 \le r \le 3$.

**2.** Procédé selon la revendication 1, dans lequel ledit composé contenant du silicium est choisi dans le groupe constitué par le vinylsilane l'allylsilane, le buténylsilane et le penténylsilane.

**3.** Procédé selon la revendication 1, dans lequel ledit composé du titane est choisi dans le groupe constitué par les composés du titane trivalent et tétravalent.

**4.** Procédé selon la revendication 3, dans lequel ledit composé du titane est choisi dans le groupe constitué par le trichlorure de titane, le tétrachlorure de titane, le tétrabromure de titane, le tétra-iodure de titane, le trichlorure de méthoxytitane, le dichlorure de diméthoxytitane et le chlorure de triéthoxytitane.

**5.** Procédé selon la revendication 1, dans lequel le composant catalytique (a) contient un hydrocarbure halogéné.

**6.** Procédé selon la revendication 5, dans lequel ledit composé hydrocarbure halogéné est choisi dans le groupe constitué par le tétrachlorure de carbone et le chloroforme.

**7.** Procédé selon la revendication 1, dans lequel le composant catalytique (a) contient au moins un composé donneur d'électrons.

**8.** Procédé selon la revendication 7, dans lequel ledit composé donneur d'électrons est choisi dans le groupe constitué par les composée ester, éther, cétone, aldéhyde, amine, amide, nitrile, thioester, thioéther et alcoxysilane.

**9.** Procédé selon la revendication 8, dans lequel ledit ester est un ester d'acide organique.

**10.** Procédé selon la revendication 8, dans lequel ledit composé alcoxysilane est choisi dans le groupe constitué par les composés alcoxysilanes ayant un groupe aromatique et les dérivés de ces composés alcoxysilanes.

**11.** Procédé selon la revendication 1, dans lequel le catalyseur ne contient pas plus de 10 % en poids de titane et pas moins de 70 % en poids d'un composé halogénure de magnésium.

**12.** Procédé selon la revendication 1, dans lequel le catalyseur ne contient pas plus de 5 % en poids de titane et pas moins de 50 % en poids d'un composé halogénure de magnésium.

**13.** Procédé selon la revendication 1, dans lequel le catalyseur ne contient pas plus de 0,5 à 2 t en poids de titane et pas moins de 70 % en poids d'un composé halogénure de magnésium.

**14.** Procédé selon la revendication 1, dans lequel ledit composé organoaluminique est choisi dans le groupe constitué par le triméthylaluminium, le triéthylaluminium, le tri-n-propylaluminium, le tri-isobutylaluminium, le tri-n-hexylaluminium, le monochlorure de diéthylaluminium, le monochlorure de di-isobutylaluminium, le sesquichlorure d'éthylaluminium, le dichlorure d'éthylaluminium, le monobromure de diéthylaluminium, le mono-iodure de diéthylaluminium, le monofluorure de diéthylaluminium et un mélange d'au moins deux de ces composés.

**15.** Procédé selon la revendication 1, dans lequel le rapport molaire du composé organoaluminique au composé du titane est de 1 à 500 moles du composé organoaluminique par mole du composé du titane.

**16.** Procédé selon la revendication 7, dans lequel le rapport molaire du composé donneur d'électrons au composé organoaluminique (b) du catalyseur n'est pas inférieur a 5 moles du composé donneur d'électrons par mole du composé organoaluminique.

**17.** Procédé selon la revendication 1, dans lequel la polymérisation est effectuée à une température de 20 à 100°C.

**18.** Procédé selon la revendication 1, dans lequel la polymérisation est effectuée à une pression absolue de 1 $kg/cm^2$ à 100 $kg/cm^2$.

**19.** Procédé selon la revendication 1, dans lequel le composé $\alpha$-oléfine est un composé $\alpha$-oléfine en $C_2$-$C_{12}$.

**20.** Procédé selon la revendication 19, dans lequel le composé $\alpha$-oléfine est choisi dane le groupe constitué par l'éthylène, le propylène, le butène-1, le pentène-1, l'hexène-1, le 4-méthylpentène-1 et un mélange d'au moins 2 de ces composés.

**21.** Procédé selon la revendication 1, dans lequel le rapport pondéral du composé $\alpha$-oléfine au composé contenant du silicium est de 0,00001 partie à 10 000 parties en poids d'$\alpha$-oléfine pour 1 partie en poids de composé contenant du silicium.

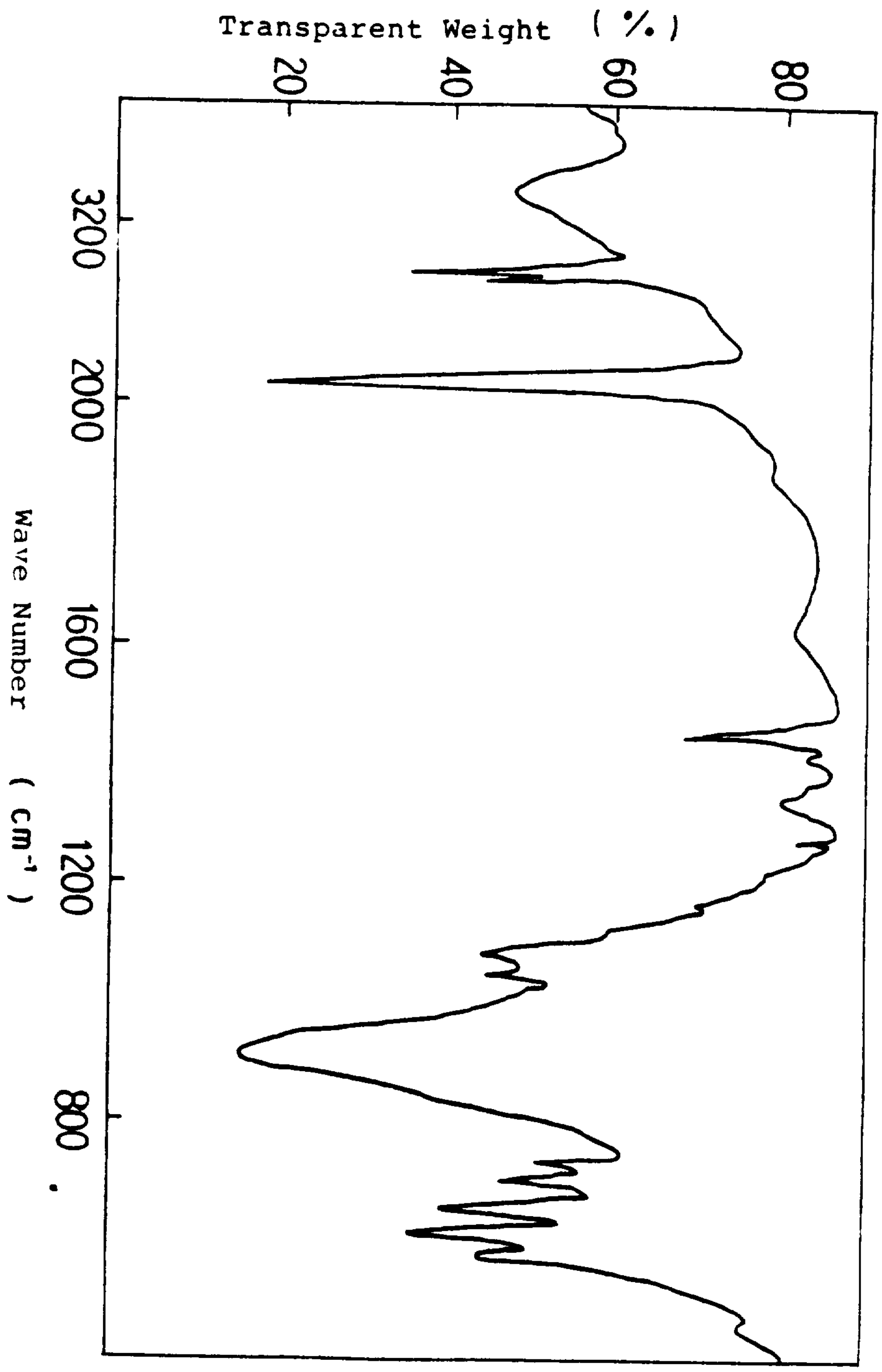
Transparent Weight ( % )
20
40
60
80
3200
2000
1600
1200
800
Wave Number ( $cm^{-1}$ )

FIGURE 1

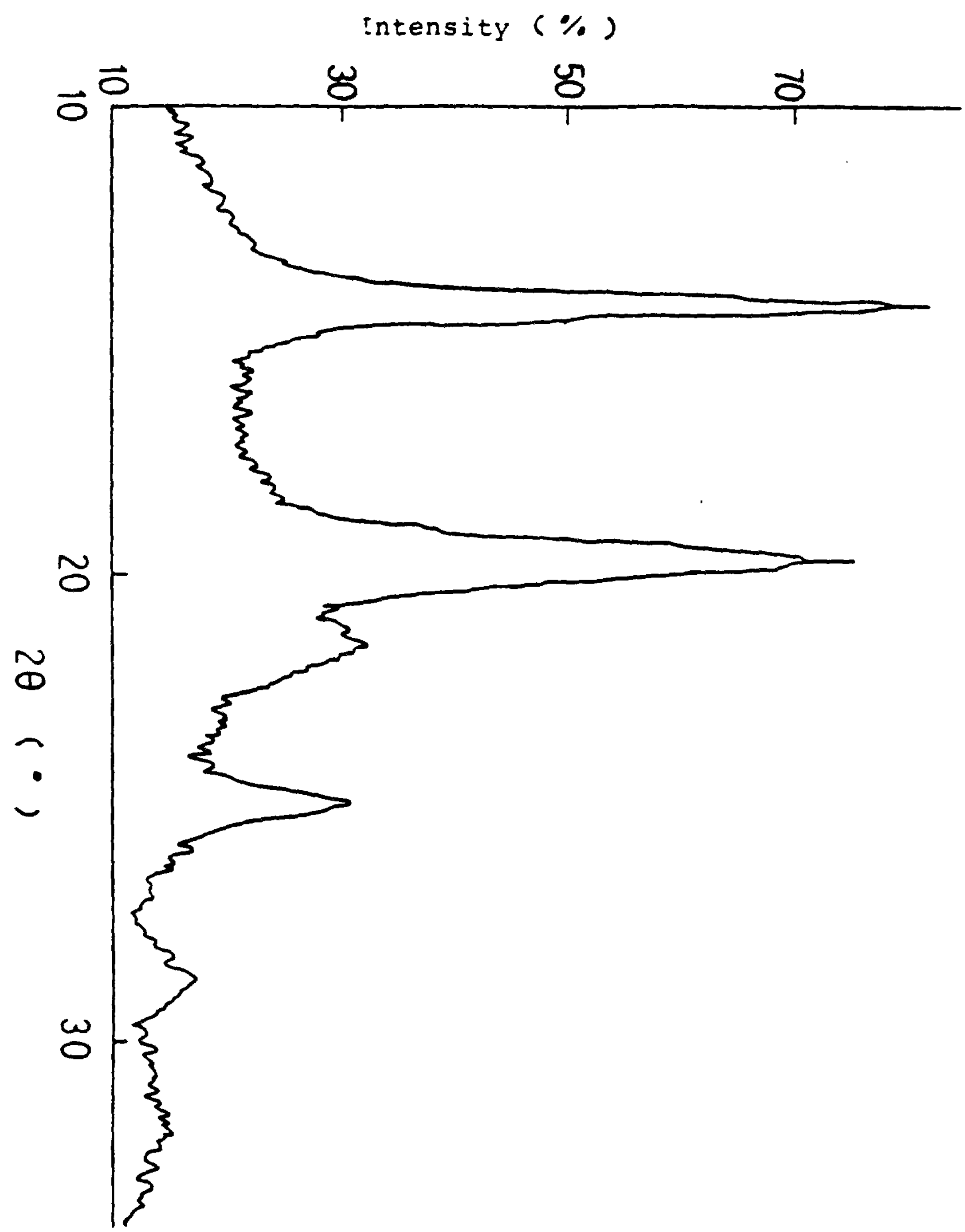


FIGURE 2

FIGURE 3

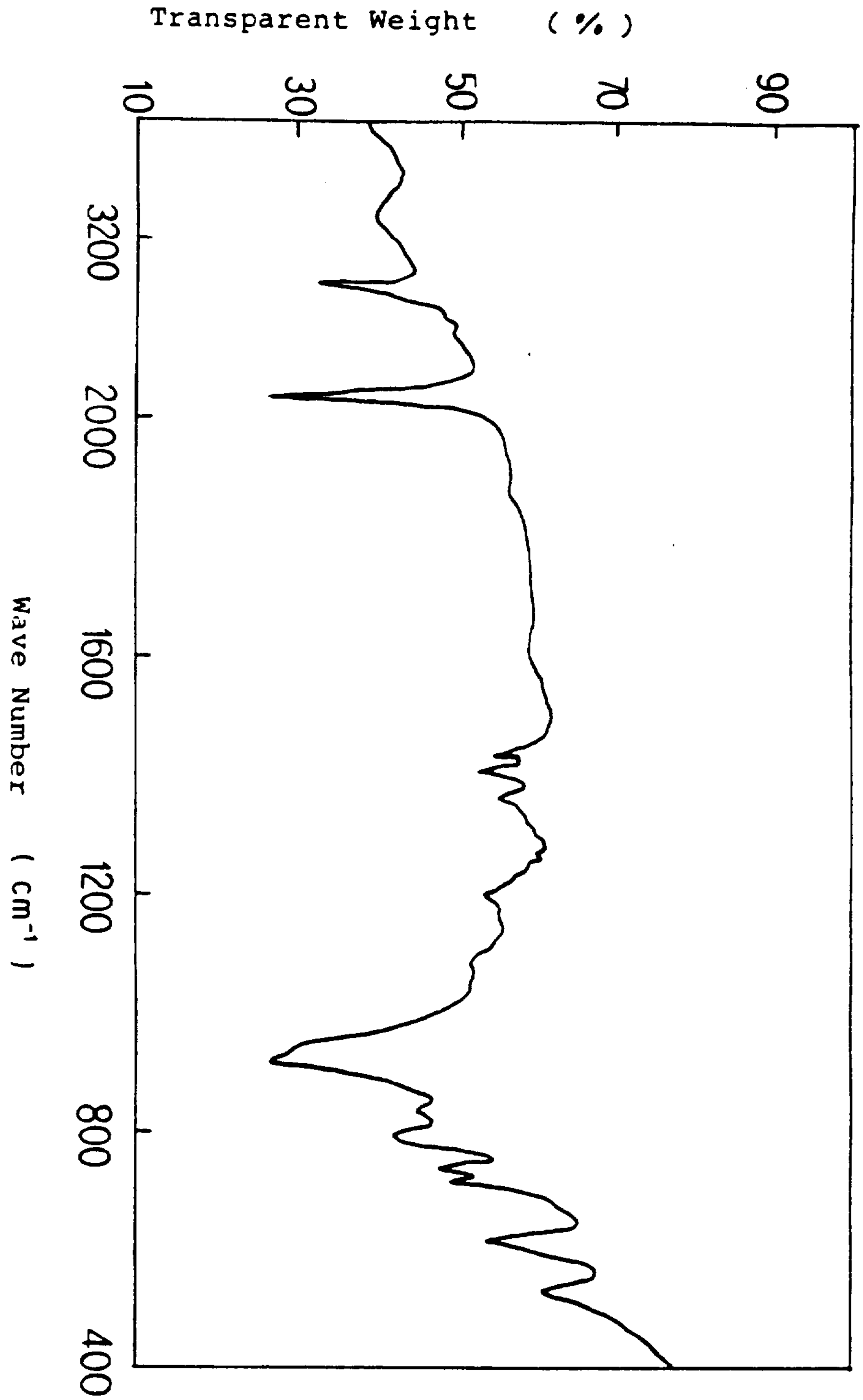
Transparent Weight ( % )
10
30
50
70
90
3200
2000
1600
1200
800
400
Wave Number ( cm⁻¹ )